# EUROPÄISCHE PATENTSCHRIFT

(11) **EP 1 099 887 B1**
(45) Veröffentlichungstag und Bekanntmachung des Hinweises auf die Patenterteilung: **17.03.2004**
(21) Anmeldenummer: 00123474.9
(22) Anmeldetag: 07.11.2000
(51) Int. Cl.: F16H 61/12, F16H 61/04, B60K 41/08

(54) **Verfahren zur Steuerung eines automatischen Schaltgetriebes für ein Kraftfahrzeug**
Method for controlling an automatic transmission in a motor vehicle
Procédé de commande d'une transmission automatique pour véhicule automobile

(30) Priorität: 12.11.1999 DE 19954605
(43) Veröffentlichungstag der Anmeldung: 16.05.2001
(73) Patentinhaber: Volkswagen Aktiengesellschaft, 38436 Wolfsburg (DE)
(72) Erfinder: Carl, Frank, 38106 Braunschweig (DE); Hofmann, Rainer, 38106 Braunschweig (DE); Christmann, Ralf, 38518 Gifhorn (DE); Krause, Heinrich, 38477 Jembke (DE); Kruse, Georg, 38518 Gifhorn (DE); Nicke, Dirk, 38106 Braunschweig (DE); Marx, Volker, 29379 Wittingen (DE); Schamscha, Axel, 38458 Velpke (DE)

(56) Entgegenhaltungen:
- DE-A- 3 940 590
- DE-A- 4 431 073
- DE-A- 19 749 681
- DE-C- 4 129 783
- US-A- 5 582 558

## Beschreibung

Die Erfindung betrifft ein Verfahren zur Steuerung eines automatischen Schaltgetriebes für ein Kraftfahrzeug, wobei das Schaltgetriebe zumindest zwei Gangstufen aufweist und das Einlegen der Gangstufen im Notfahrbetrieb ohne eine automatische oder manuelle Betätigung der Kupplung gesteuert wird.

Im Stand der Technik, von dem die Erfindung ausgeht (DE-A-39 40 590), wird eine Notbetätigung für ein Getriebe beschrieben, bei dem durch eine Hilfskraftquelle die Schaltung noch betätigt werden kann, d.h. die Gangstufen bzw. Gänge innerhalb des Getriebes entsprechend eingelegt werden können, wobei hier keine Kupplungsbetätigung erfolgen muß. Das hier beschriebene Schaltgetriebe ist als mechanisches Geschwindigkeitswechselgetriebe ausgeführt und weist zwölf Vorwärtsgänge auf, die manuell einlegbar sind, ohne daß das Kupplungspedal betätigt werden muß, also ohne daß die Kupplung hierfür unbedingt zu betätigen wäre. Zwar wird hier auch eine Weiterentwicklung dahingehend erwähnt, daß die Drehzahlen der Getriebeeingangs- und Getriebeausgangswellen verglichen werden können, um ― in bekannter Weise ― eine entsprechende Synchronisation zu erreichen, allerdings wird über das Herausnehmen bzw. Einlegen bestimmter Gangstufen dann nichts mehr weiter erläutert. Im beschriebenen bevorzugten Ausführungsbeispiel kann der Fahrer die nächste Gangstufe auswählen bzw. einlegen, wobei dann über Stellaktuaktoren, nämlich Schaltstangen, die in X- und Y-Richtung verschiebbar sind diverse Gangstufe ausgerückt bzw. dann die zweite Gangstufe entsprechend eingelegt wird.

Im Stand der Technik ist weiterhin ein Verfahren für die Steuerung eines Getriebes bekannt (DE-C-41 29 783), das als Stufengetriebeausgeführt ist und im Notlaufbetrieb die Gangstufen bzw. die derart gesteuert wird, daß im Notlaufbetrieb Gänge durch einen erhöhten Arbeitsdruck schnell eingelegt werden können, wenn die Steuerung Fehler beim Hochschalten der Gänge erkennt. Folglich ist die Steuerschaltung - auch wenn Fehler auftreten - weniger störanfällig, da der Arbeitsdruck vor dem Einlegen der entsprechenden Gangstufen erhöht wird und die Gänge so entsprechend schnell eingelegt werden können.

Weiterhin beschreibt die DE-A-44 31 073 ein Notfahrprogramm für ein Automatikgetriebe, wenn eine erste Kupplung nicht mehr aktiviert werden kann, also defekt ist. Hierzu ist ein innerhalb des Steuerungssystems eine zweite Kupplung vorgesehen, die beim Ausfall der ersten Kupplung entsprechend angesteuert werden kann, so daß noch verschiedenen Gangstufen des Automatikgetriebes eingelegt werden können.

Schließlich beschreibt die DE-A-197 49 681 eine Vorrichtung zur Betätigung eines Automatikgetriebes und/oder einer Kupplung. In Notfahrbetrieb dieses Automatikgetriebes kann ein beliebiger Gang eingelegt werden. Grundsätzlich wird hier nur geschildert, daß ein bestimmter Gang eingelegt wird, es wird also nicht beschrieben, daß im Notfahrbetrieb auch zwischen verschiedenen Gängen geschaltet werden kann.

Im Stand der Technik, von dem die Erfindung ausgeht (DE-A-39 40 590), ist nicht optimal, daß hier grundsätzlich der Fahrer des Kraftfahrzeuges entscheiden muß, wann er nun im Notfahrbetrieb, also vorzugsweise bei defekter Kupplung, eine bestimmte Gangstufe einlegen muß, bzw. von einer niedrigen in eine höhere Gangstufen schalten kann. Vorzugsweise realisiert er dies über die "individuelle Gehör-Synchronisation", so daß er hier manuell von einer ersten in eine zweite Gangstufe schaltet, wenn er der Meinung ist, daß die entsprechenden Drehzahlen dies auch zulassen. Hierbei ist insbesondere das Ausrücken der einzelnen im Schaltgetriebe eingelegten Gangstufen problematisch. Grundsätzlich wirken hier in üblicher Weise ein Schiebemuffen-/Zahnrad-Paar zusammen, d.h. zum Einlegen eines Ganges bzw. einer Gangstufe wird eine Schiebemuffe eingerückt, wobei Schiebemuffe und Zahnrad dann so ausgebildet sind, daß ein "Hinterschnitt" gebildet ist, so daß die Schiebemuffe beim Anliegen eines entsprechenden Drehmomentes auch nicht wieder ausrückbar ist. Folglich muß der Fahrer dieses Kraftfahrzeugs sich sehr konzentrieren, um nämlich einerseits den richtigen Zeitpunkt zum Ausrücken der Schiebemuffe, nämlich der Gangstufe zu "erwischen" um dann andererseits - wiederum nach Gehör - die nächste Gangstufe einzulegen, d.h. die nächste Schiebemuffe hier dann wieder einrücken zu lassen. Die Praxis hat gezeigt, daß die hier realisierten Schaltungen bzw. diese Steuerung dieses Automatikgetriebes dann nicht immer optimal erfolgt. So treten bei defekter Kupplung, also im Notfahrbetrieb bei dem bekannten Schaltgetriebe oft Beschädigungen auf, da eben der Fahrer aufgrund seines individuellen Schaltens, die Schaltzeitpunkte nicht optimal "erwischt", so daß Beschädigungen an den entsprechenden Zahnkränzen der Zahnräder bzw. der. Schiebemuffen-/Zahnrad-Paare auftreten können, was die Kosten für eventuelle Reparaturen erhöht.

Der Erfindung liegt daher die Aufgabe zugrunde, ein Verfahren zur Steuerung eines automatischen Schaltgetriebes für ein Kraftfahrzeug anzugeben, wobei im Notfahrbetrieb des Schaltgetriebes das Herausnehmen bzw. Einrücken der jeweiligen Gangstufen erleichtert ist.

Die zuvor aufgezeigte Aufgabe ist nun dadurch gelöst, daß im Notfahrbetrieb, nämlich bei defekter Kupplung das Einlegen und/oder Herausnehmen der jeweiligen Gangstufen mit Hilfe eines Steuergerätes gesteuert wird, daß bei einem Getriebeeingangswellen-Drehmoment von im wesentlichen "Null" die eingelegte Gangstufe herausgenommen wird, daß dann die Drehzahl der Motorwelle bzw. der Getriebeeingangswelle im wesentlichen der aktuellen Drehzahl der einzulegenden nächsten Gangstufe angepaßt wird und dann die entsprechende Gangstufe eingelegt wird. Dadurch, daß nunmehr im Notfahrbetrieb, nämlich bei defekter, nämlich permanent geschlossener Kupplung das Einlegen und/oder Herausnehmen der jeweiligen Gangstufen mit Hilfe eines Steuergerätes auf die Art und Weise gesteuert wird, daß die Gänge herausgenommen werden, wenn das Getriebeeingangswellen-Drehmoment im wesentlichen nicht anliegt, d.h. eben "Null" beträgt, kann der Gang auf schonende und einfache Weise herausgenommen werden, da an der entsprechenden Schiebemuffe eben keine Zug- oder Druckkräfte wirken, so daß diese ohne Probleme ausgerückt werden kann. Desweiteren trägt das Steuergerät dafür Sorge, daß die Drehzahl der Motorwelle, je nach dem ob nun ein höherer oder niedriger nächster Gang eingelegt wird, entweder erhöht oder erniedrigt wird, nämlich so, daß die Drehzahl der Motorwelle bzw. der Getriebeeingangswelle dann im wesentlichen der aktuellen Drehzahl der einzulegenden nächsten Gangstufe entspricht, so daß diese dann auch problemlos und wiederum schonend eingelegt werden kann, nämlich die entsprechende Schiebemuffe eingerückt wird. Im Ergebnis werden durch das erfindungsgemäße Verfahren die eingangs beschriebenen Nachteile vermieden, wobei auch im Notfahrbetrieb das Schaltgetriebe schonend benutzt wird, d.h. ohne das hier Beschädigungen während der Schaltvorgänge an den entsprechenden Zahnkränzen der Gangstufen auftreten. Hierdurch ist nicht nur eine optimale Schaltung des Getriebes im Notfahrbetrieb realisiert, sondern es werden auch die angesprochenen Beschädigungen und die damit verbundenen Reparaturkosten vermieden.

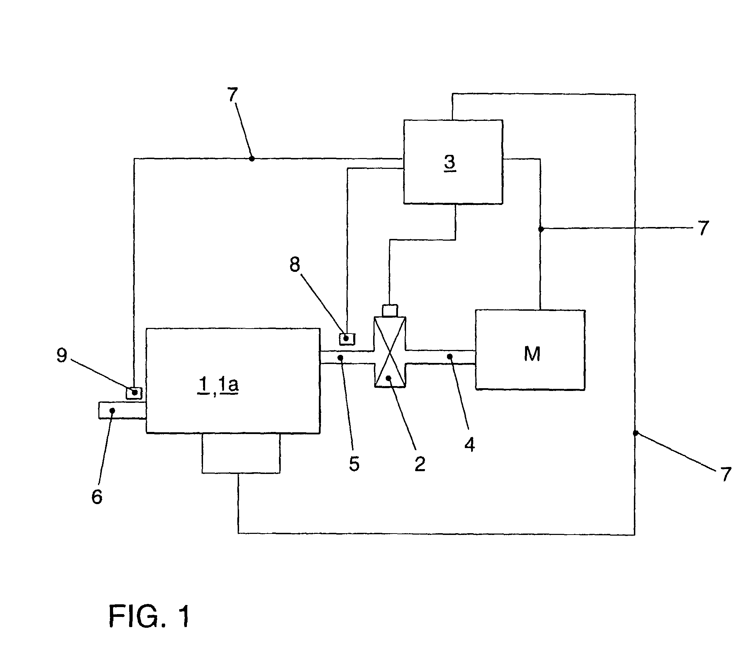

Es gibt nun eine Vielzahl von Möglichkeiten, daß erfindungsgemäße Verfahren in vorteilhafter Weise auszugestalten und weiterzubilden. Hierfür darf zunächst auf die dem Patentanspruch 1 nachgeordneten Patentansprüche verwiesen werden. Im Einzelnen soll nun ein bevorzugtes Ausführungsbeispiel der Erfindung anhand der folgenden Beschreibung sowie Zeichnung näher erläutert werden. In der Zeichnung zeigt
- Fig. 1: in stark vereinfachter schematischer Darstellung ein Blockschaltbild zur Steuerungen eines automatischen Schaltgetriebes gemäß dem erfindungsgemäßen Verfahren.

Die einzige Figur der Zeichnung, nämlich die Fig. 1 zeigt in stark vereinfachter schematischer Darstellung das Verfahren zur Steuerung eines automatischen Schaltgetriebes 1 für ein hier nicht näher dargestelltes Kraftfahrzeug. Das Schaltgetriebe 1 weist zumindest zwei hier nicht näher dargestellte Gangstufen auf. Das hier in Fig. 1 dargestellte automatische Schaltgetriebe 1 ist vorzugsweise als automatisiertes Schaltgetriebe 1a, insbesondere als 6-Gang-Getriebe ausgeführt. Es sind also mehr als nur zwei Gangstufen vorgesehen, insbesondere sind zumindest fünf Vorwärtsgänge, also fünf einlegbare Gangstufen vorgesehen. Im Notfahrbetrieb ist das Einlegen der einzelnen Gangstufen ohne eine automatischen oder manuelle Betätigung der Kupplung steuerbar. Anders ausgedrückt, wenn die Kupplung defekt ist, nämlich sich nicht mehr öffnen läßt, also die Kupplung permanent geschlossen ist, so daß die Motorwelle 4 mit der Getriebeeingangswelle 5 drehverbunden ist, muß für das hier dargestellte automatische Schaltgetriebe 1 ein Notfahrbetrieb realisierbar sein.

Im Stand der Technik war bisher üblich, daß bei einem automatischen Schaltgetriebe 1 im Notfahrbetrieb dann eine bestimmte Gangstufe einlegbar ist, bspw. der zweite Gang, so daß man zur nächsten Werkstatt fahren konnte, oder daß eine zweite Kupplung vorgesehen war, mit deren Hilfe noch verschiedene Gänge des Schaltgetriebes einlegbar sind. Weiterhin ist ein anderes Verfahren, von dem die Erfindung ausgeht bekannt, bei dem der Fahrer manuell einzelne Gangstufen einlegen kann, dies aber im wesentlichen "nach Gehör" und "individuellen Gefühl" realisieren muß, wobei die Praxis gezeigt hat, daß hier die Gefahr von Beschädigungen der entsprechenden Zahnkränze gegeben ist.

Bei dem erfindungsgemäßen Verfahren werden die oben geschilderten Nachteile nun dadurch vermieden, daß im Notfahrbetrieb, nämlich bei defekter Kupplung 2 das Einlegen und/oder Herausnehmen der jeweiligen Gangstufen mit Hilfe eines Steuergerätes 3 gesteuert wird, daß bei einem Getriebeeingangswellen-Drehmoment von im wesentlichen "Null" die eingelegte Gangstufe herausgenommen wird, daß dann die Drehzahl der Motorwelle 4 bzw. der Getriebeeingangswelle 5 im wesentlichen der aktuellen Drehzahl der einzulegenden nächsten Gangstufe angepaßt wird und dann die entsprechende Gangstufe eingelegt wird. Das erfindungsgemäße Verfahren weist wesentliche Vorteile auf. Einerseits wird im Notfahrbetrieb das Einlegen und/oder Herausnehmen der jeweiligen Gangstufen mit Hilfe des Steuergerätes nunmehr automatisch gesteuert. Folglich wird hier keine manuelle Schaltung - wie bisher im Stand der Technik üblich ― realisiert, so daß es auch nicht mehr zu den eingangs erwähnten Beschädigungen der Zahnkränze einschließlich der damit verbundenen Kosten kommt. Durch die erfindungsgemäße Steuerung, nämlich dadurch, daß der jeweils eingelegte Gang erst dann herausgenommen wird, wenn das Getriebeeingangswellen-Drehmoment im wesentlichen den Betrag "Null" aufweist, kann die entsprechende Schiebemuffe problemlos und schonend ausgerückt werden. Erst im zweiten Schritt wird dann die nächste Gangstufe eingelegt, aber erst dann, wenn die Drehzahl der Motorwelle 4 bzw. der Getriebeeingangswelle 5 im wesentlichen der aktuellen Drehzahl der dann einzulegenden nächsten Gangstufe entspricht. Denn erst nach der entsprechenden Anpassung dieser Drehzahl ist das Einlegen bzw. Einrücken der Schiebemuffe problemlos und schonend möglich.

Fig. 1 zeigt nun ohne eine nähere Darstellung des Kraftfahrzeuges aber mit der Darstellung der wesentlichen Bestandteile des Antriebsstranges, das automatische Schaltgetriebe 1, das hier als automatisiertes Schaltgetriebe 1a ausgeführt ist. Gut zu erkennen ist die Drehverbindung der Getriebeeingangswelle 5 mit der Motorwelle 4 über die Kupplung 2. Im Normalfall, also nicht im Notfahrbetrieb wird die Kupplung 2 und das Einlegen der entsprechenden Getriebegänge mit Hilfe des Steuergerätes 3 gesteuert. An die hier nur schematisch dargestellte Getriebeausgangswelle 6 schließt sich in bekannter Weise der Antriebsstrang zu den Rädern des hier nicht dargestellten Kraftfahrzeuges an. Das Steuergerät 3 ist über entsprechende Steuerleitungen 7 mit den wesentlichen Bestandteilen des Steuersystems verbunden, nämlich mit dem automatischen Schaltgetriebe 1, der Kupplung 2, dem Motor M sowie den Sensoren 8 und 9. Der Sensor 8 mißt hier die Drehzahl der Getriebeeingangswelle 5, wobei der Sensor 9 die Drehzahl der Getriebeausgangswelle 6 mißt und die Werte dem Steuergerät 3 über die Steuerleitungen 7 zuleitet werden. Weiterhin werden dem Steuergerät 3 die aktuellen, nämlich entsprechend anliegenden Motorkenndaten zugeleitet, was hier über die entsprechende Steuerleitung 7 ebenfalls angedeutet werden soll. Hierzu zählen insbesondere der aktuelle Kraftstoffverbrauch, sowie weitere Kenndaten des Fahrbetriebs wie zugeschaltete Aggregate, die entsprechend mit Energie versorgt werden müssen.

Aus den dem Steuergerät 3 zugeleiteten Motorkenndaten ermittelt das Steuergerät 3 nun die aktuelle Motorleistung und/oder das Motorwellen-Drehmoment bzw. das Getriebeeingangswellen-Drehmoment. Bspw. kann das Steuergerät 3 aus den augenblicklichen Kraftstoffverbrauch des Motors M auf dessen Nennleistung zurückschließen, wobei in Verbindung mit der Drehzahl der Motorwelle 4 bzw. der Getriebeeingangswelle 5 dann das anliegende Drehmoment berechenbar ist.

Für den Fall nun, daß die Kupplung 2 defekt ist, insbesondere sich nicht mehr öffnen läßt, also die Getriebeeingangswelle 5 und die Motorwelle M drehfest miteinander verbunden sind, wird nunmehr das erfindungsgemäße Verfahren, nämlich der Notfahrbetrieb bei defekter Kupplung 2 realisiert. Folglich wird die eingelegte Gangstufe erst dann herausgenommen, wenn das Getriebeeingangswellen-Drehmoment im wesentlichen den Betrag "Null" aufweist, denn dann ist das Ausrücken der Schiebemuffe des Schiebemuffen/Zahnrad-Paares - wie bisher im Stand der Technik üblicherweise realisiert - problemlos möglich. Hiernach wird über das Steuergerät 3, also kurz vor dem Einlegen der nunmehr ausgewählten weiteren Gangstufe die Drehzahl des Motors M bzw. der Motorwelle 4 entsprechend gesteuert. Das Steuergerät 3 errechnet aus der aktuellen Drehzahl der Getriebeausgangswelle 6, wobei dieser Wert dem Steuergerät 3 über den Sensor 8 zugeleitet wird und den je nach Getriebetyp innerhalb des Getriebe unterschiedlichen existierenden Übersetzungsverhältnissen die an der nunmehr einzulegenden Gangstufe die aktuell anliegende Drehzahl. An diese Drehzahl der einzulegenden Gangstufe wird nunmehr die Drehzahl der Motorwelle 4 bzw. der Getriebeeingangswelle 5 angepaßt. Im Fall des Hochschaltens von einem niedrigen zu einen hohen Gang wird die Drehzahl der Motorwelle 4 entsprechend vermindert, wobei beim Herunterschalten von einem hohen zu einem niedrigen Gang die Drehzahl der Motorwelle 4 entsprechend erhöht wird. Erst nach der erfolgten Anpassung der Drehzahlen, also bei gleicher Drehzahl der Motorwelle 4 bzw. Getriebeeingangswelle 5 und der Drehzahl der einzulegenden Gangstufe wird dann nächste diese Gangstufe eingelegt. Hierdurch ist das Einrücken der innerhalb des Schaltgetriebes 1 existierenden Schiebemuffe bei den an der einzulegenden Gangstufe existierenden Schiebemuffen-/Zahnrad-Paares problemlos möglich.

Insbesondere berechnet das Steuergerät 3, das Motorwellen-Drehmoment bzw. das Getriebeeingangswellen-Drehmoment unter Berücksichtigung der jeweiligen aggregatspezifischen Verlustleistungen, d.h. unter Berücksichtigung der jeweils in diesem Augenblick zugeschalteten Aggregate des Kraftfahrzeuges wie bspw. Lichtmaschine, Klimaanlage, etc..

Wie bereits oben erläutert erfolgt das Einlegen bzw. Herausnehmen der Gangstufen, d.h. das Einlegen des ersten bis fünften Vorwärtsganges durch das Ein- bzw. Ausrücken der Schiebemuffe des jeweiligen innerhalb der Schaltgetriebes 1 angeordneten Schiebemuffen/Zahnrad-Paares. Die Steuerung der Schiebemuffen soll hier nicht im einzelnen erläutert werden. Es darf aber darauf hingewiesen werden, daß zum Ein- bzw. Ausrücken der jeweiligen Schiebemuffen entsprechende Aktuaktoren vorgesehen sind. Beispielhaft darf hierzu nochmals auf die DE-A-39 40 590 verwiesen werden, wo derartige Aktuaktoren als Stellantriebe explizit aufgeführt sind und die Stellantriebe in X- und Y-Richtung entsprechend verschiebbar ausgebildet sind. Es ist denkbar, daß derartige Stellantriebe hydraulisch oder pneumatisch sowie elektrisch betrieben werden, was hier im einzelnen nicht weiter erörtert werden soll.

Im Ergebnis darf festgehalten werden, daß die eingangs beschriebenen Nachteile dadurch verhindert sind, daß der Notfahrbetrieb mit Hilfe des Steuergerätes 3 realisiert wird, wobei das Ausrücken der eingelegten Gangstufe unter Berücksichtigung des anliegenden Getriebeeingangswellen-Drehmomentes erfolgt und die nächste einzulegende Gangstufe erst dann eingelegt wird, wenn die entsprechenden Drehzahlen der Getriebeeingangswelle 5 und der an der Gangstufe anliegende Drehzahl entsprechend angepaßt sind. Vorzugsweise weist das Steuergerät 3 einen Mikroprozessor und/oder abgespeicherte Drehmomnet/Drehzahl-Kennlinienfelder auf. Dieses Verfahren ist grundsätzlich unabhängig davon wieviel Vorwärtsgänge das Schaltgetriebe 1 nunmehr aufweist. Das hier dargestellte automatische Schaltgetriebe 1 ist als automatisiertes Schaltgetriebe 1a ausgeführt und weist insgesamt sechs Gänge, insbesondere fünf Vorwärtsgänge (Gangstufen) auf. In Abhängigkeit des Fahrverhaltens bzw. des individuellen Fahrerwunsches werden die entsprechenden Gänge nach dem erfindungsgemäßen Verfahren nacheinander hoch- oder heruntergeschaltet. Und zwar so, daß der Fahrer hier nicht mehr - wie bisher im Stand der Technik - manuell schalten muß und somit Beschädigungen auftreten können, sondern daß dies auf komfortable Art und Weise für den Fahrer realisiert ist und dieser eben nicht mehr "nach Gehör" die jeweiligen Gangstufen einlegen muß.

### BEZUGSZEICHENLISTE

- 1: automatisches Schaltgetriebe
- 1a: automatisiertes Schaltgetriebe
- 2: Kupplung
- 3: Steuergerät
- 4: Motorwelle
- 5: Getriebeeingangswelle
- 6: Getriebeausgangswelle
- 7: Steuerleitungen
- 8: Sensor
- 9: Sensor

- M: Motor

## Patentansprüche

1. Verfahren zur Steuerung eines automatischen Schaltgetriebes (1) für ein Kraftfahrzeug, wobei das Schaltgetriebe (1) zumindest zwei Gangstufen aufweist und das Einlegen der Gangstufen im Notfahrbetrieb ohne eine automatische oder manuelle Betätigung der Kupplung (2) gesteuert wird, **dadurch gekennzeichnet, daß** im Notfahrbetrieb, nämlich bei defekter Kupplung (2) das Einlegen und/oder Herausnehmen der jeweiligen Gangstufen mit Hilfe eines Steuergerätes (3) gesteuert wird, daß bei einem Getriebeeingangswellen-Drehmoment von im wesentlichen "Null" die eingelegte Gangstufe herausgenommen wird, daß dann die Drehzahl der Motorwelle (4) bzw. der Getriebeeingangswelle (5) im wesentlichen der aktuellen Drehzahl der einzulegenden nächsten Gangstufe angepaßt wird und dann die entsprechende Gangstufe eingelegt wird.

2. Verfahren nach dem vorhergehenden Anspruch, **dadurch gekennzeichnet, daß** die Drehzahlen der Getriebeeingangswelle (5) und der Getriebeausgangswelle (6) gemessen werden und diese Werte dem Steuergerät (3) zugeleitet werden.

3. Verfahren nach Anspruch 2, **dadurch gekennzeichnet, daß** die Drehzahlen der Getriebeeingangswelle (5) bzw. der Getriebeausgangswelle (6) über entsprechende Drehzahlsensoren (8, 9) gemessen werden.

4. Verfahren nach einem der vorstehenden Ansprüche, **dadurch gekennzeichnet, daß** dem Steuergerät (3) die aktuellen Motorkenndaten, insbesondere der Kraftstoffverbrauch etc., zugeleitet werden.

5. Verfahren nach einem der vorstehenden Ansprüche, **dadurch gekennzeichnet, daß** das Steuergerät (3) aus den Motorkenndaten die aktuelle Motorleistung und/oder das Motorwellen-Drehmoment bzw. das Getriebeeingangswellen-Drehmoment ermittelt.

6. Verfahren nach einem der vorstehenden Ansprüche, **dadurch gekennzeichnet, daß** das Steuergerät (3) zumindest kurz vor dem Einlegen der entsprechenden Gangstufe die Drehzahl des Motors (M) steuert.

7. Verfahren nach einem der vorstehenden Ansprüche, **dadurch gekennzeichnet, daß** das Steuergerät (3) aus der aktuellen Drehzahl der Getriebeausgangswelle (6) und den innerhalb des Getriebes (1) existierenden Übersetzungsverhältnissen die an der einzulegenden Gangstufe anliegende Drehzahl errechnet.

8. Verfahren nach einem der vorstehenden Ansprüche, **dadurch gekennzeichnet, daß** die Drehzahl der Motorwelle (4) bzw. der Getriebeeingangswelle (5) an die Drehzahl der einzulegenden Gangstufe angepaßt, nämlich entsprechend erhöht oder vermindert wird.

9. Verfahren nach einem der vorstehenden Ansprüche, **dadurch gekennzeichnet, daß** nach erfolgter Anpassung der Drehzahlen die nächste Gangstufe eingelegt wird.

10. Verfahren nach einem der vorstehenden Ansprüche, **dadurch gekennzeichnet, daß** das Steuergerät (3) das Motorwellen-Drehmoment bzw. das Getriebeeingangswellen-Drehmoment unter Berücksichtigung der jeweiligen aggregatspezifischen Verlustleistungen berechnet.

11. Verfahren nach einem der vorstehenden Ansprüche, **dadurch gekennzeichnet, daß** das Einlegen bzw. Herausnehmen einer Gangstufe durch das Ein- bzw. Ausrücken der Schiebemuffe eines Schiebemuffen-/Zahnrad-Paares erfolgt.

12. Verfahren nach einem der vorstehenden Ansprüche, **dadurch gekennzeichnet, daß** zum Ein- bzw. Ausrücken der Schiebemuffe entsprechende Aktuatoren vorgesehen sind.

13. Verfahren nach einem der vorstehenden Ansprüche, **dadurch gekennzeichnet, daß** die Aktuatoren über das Steuergerät (3) steuerbar sind.

14. Verfahren nach einem der vorstehenden Ansprüche, **dadurch gekennzeichnet, daß** das Getriebe als automatisiertes Schaltgetriebe (1a) ausgeführt ist.

15. Verfahren nach einem der vorstehenden Ansprüche, **dadurch gekennzeichnet, daß** das automatische Schaltgetriebe (1) als Sechs-Gang-Getriebe ausgeführt ist.

## Claims

1. Method for controlling an automatic gearbox (1) for a motor vehicle, the gearbox (1) having at least two gearsteps being controlled, in the emergency driving mode, without an automatic or manual actuation of the clutch (2), **characterized in that**, in the emergency driving mode, to be precise when the clutch (2) is defective, the engagement and/or disengagement of the respective gearsteps is controlled with the aid of a control unit (3), **in that**, in the event of a gearbox input shaft torque of essentially "zero", the engaged gearstep is disengaged, and **in that**, then, the rotational speed of the engine shaft (4) or of the gearbox input shaft (5) is adapted essentially to the current rotational speed of the next gearstep to be engaged, and the corresponding gearstep is then engaged.

2. Method according to the preceding claim, **characterized in that** the rotational speeds of the gearbox input shaft (5) and of the gearbox output shaft (6) are measured, and these values are delivered to the control unit (3).

3. Method according to Claim 2, **characterized in that** the rotational speeds of the gearbox input shaft (5) and of the gearbox output shaft (6) are measured via corresponding rotational-speed sensors (8, 9).

4. Method according to one of the preceding claims, **characterized in that** the current engine characteristic data, in particular the fuel consumption, etc., are delivered to the control unit (3).

5. Method according to one of the preceding claims, **characterized in that** the control unit (3) determines from the engine characteristic data the current engine power and/or the engine shaft torque or the gearbox input shaft torque.

6. Method according to one of the preceding claims, **characterized in that** the control unit (3) controls the rotational speed of the engine (M) at least shortly before the engagement of the corresponding gearstep.

7. Method according to one of the preceding claims, **characterized in that**, from the current rotational speed of the gearbox output shaft (6) and from the transmission ratios existing within the gearbox (1), the control unit (3) calculates the rotational speed prevailing at the gearstep to be engaged.

8. Method according to one of the preceding claims, **characterized in that** the rotational speed of the engine shaft (4) or of the gearbox input shaft (5) is adapted to the rotational speed of the gearstep to be engaged, to be precise is increased or reduced correspondingly.

9. Method according to one of the preceding claims, **characterized in that**, after the adaptation of the rotational speeds has taken place, the next gearstep is engaged.

10. Method according to one of the preceding claims, **characterized in that** the control unit (3) calculates the engine shaft torque or the gearbox input shaft torque, taking into account the respective assembly-specific power losses.

11. Method according to one of the preceding claims, **characterized in that** the engagement and disengagement of a gearstep take place by means of the respective engagement and disengagement of the sliding sleeve of a sliding-sleeve/gearwheel pair.

12. Method according to one of the preceding claims, **characterized in that**, for the engagement and disengagement of the sliding sleeve, corresponding actuators are provided.

13. Method according to one of the preceding claims, **characterized in that** the actuators can be controlled via the control unit (3).

14. Method according to one of the preceding claims, **characterized in that** the gearbox is designed as an automated manual gearbox (1a).

15. Method according to one of the preceding claims, **characterized in that** the automatic gearbox (1) is designed as a six-gear gearbox.

## Revendications

1. Procédé de commande d'une boîte de vitesses automatique (1) pour un véhicule automobile où la boîte de vitesses (1) comporte au moins deux rapports de vitesse et où l'engagement des rapports de vitesse, en fonctionnement en mode de secours, est commandé sans manoeuvre automatique ou manuelle de l'embrayage (2), **caractérisé en ce qu'**en fonctionnement en mode de secours, c'est-à-dire en cas d'embrayage (2) défectueux, l'engagement et/ou le dégagement des différents rapports de vitesse est commandé à l'aide d'un appareil de commande (3), **en ce qu'**en cas de couple de rotation de l'arbre d'entrée de boîte de vitesses de valeur pratiquement « nulle », le rapport de vitesse engagé est dégagé, **en ce que** la vitesse de rotation de l'arbre du moteur (4) ou de l'arbre d'entrée de boîte de vitesses (5) est alors quasiment adaptée à la vitesse de rotation actuelle du rapport de vitesse suivant à engager et le rapport de vitesse correspondant est alors engagé.

2. Procédé selon la précédente revendication, **caractérisé en ce que** les vitesses de rotation de l'arbre d'entrée de boîte de vitesses (5) et de l'arbre de sortie de boîte de vitesses (6) sont mesurées et ces valeurs sont amenées à l'appareil de commande (3).

3. Procédé selon la revendication 2, **caractérisé en ce que** les vitesses de rotation de l'arbre d'entrée de boîte de vitesses (5) ou de l'arbre de sortie de boîte de vitesses (6) sont mesurées via des capteurs de vitesse de rotation respectifs (8, 9).

4. Procédé selon l'une quelconque des revendications précédentes, **caractérisé en ce que** les données caractéristiques actuelles du moteur, en particulier la consommation de carburant, etc. sont amenées à l'appareil de mesure (3).

5. Procédé selon l'une quelconque des revendications précédentes, **caractérisé en ce qu'**à partir des données caractéristiques du moteur, l'appareil de commande (3) détermine la puissance actuelle du moteur et/ ou le couple de rotation de l'arbre du moteur ou bien le couple de rotation de l'arbre d'entrée de boîte de vitesses.

6. Procédé selon l'une quelconque des revendications précédentes, **caractérisé en ce que** l'appareil de commande (3) règle la vitesse de rotation du moteur (M) au moins juste avant l'engagement du rapport de vitesse correspondant.

7. Procédé selon l'une quelconque des revendications précédentes, **caractérisé en ce qu'**à partir de la vitesse de rotation actuelle de l'arbre de sortie de boîte de vitesses (6) et des rapports de démultiplication existant au sein de la boîte de vitesses (1), l'appareil de commande (3) calcule la vitesse de rotation ajustée au rapport de vitesse à engager.

8. Procédé selon l'une quelconque des revendications précédentes, **caractérisé en ce que** la vitesse de rotation de l'arbre du moteur (4) ou de l'arbre d'entrée de boîte de vitesses (5) est adaptée à la vitesse de rotation du rapport de vitesse à engager, à savoir elle est respectivement augmentée ou diminuée.

9. Procédé selon l'une quelconque des revendications précédentes, **caractérisé en ce qu'**après avoir effectué l'adaptation des vitesses de rotation, le rapport de vitesse suivant est engagé.

10. Procédé selon l'une quelconque des revendications précédentes, **caractérisé en ce que** l'appareil de commande (3) calcule le couple de rotation de l'arbre du moteur ou le couple de rotation de l'arbre d'entrée de boîte de vitesses moyennant prise en compte des puissances dissipées spécifiques aux agrégats respectifs.

11. Procédé selon l'une quelconque des revendications précédentes, **caractérisé en ce que** l'engagement et le dégagement d'un rapport de vitesse ont lieu par embrayage ou débrayage du baladeur d'une paire baladeur-pignon.

12. Procédé selon l'une quelconque des revendications précédentes, **caractérisé en ce que** l'embrayage ou le débrayage du baladeur est assuré par des actionneurs respectifs.

13. Procédé selon l'une quelconque des revendications précédentes, **caractérisé en ce que** les actionneurs peuvent être commandés via l'appareil de commande (3).

14. Procédé selon l'une quelconque des revendications précédentes, **caractérisé en ce que** la transmission est réalisée en tant que boîte de vitesses automatisée (la).

15. Procédé selon l'une quelconque des revendications précédentes, **caractérisé en ce que** la boîte de vitesses automatisée (1) est réalisée en tant que transmission à six rapports.
